# EUROPEAN PATENT APPLICATION

(11) **EP 4 844 504 A1**
(43) Date of publication of application: **25.11.2026**
(21) Application number: 26176065.6
(22) Date of filing: 01.05.2026
(51) Int. Cl.: G05B 19/05, G06F 8/51

(54) **HYBRID DICTIONARY BASED MIGRATION OF PLC CONTROL SYSTEMS**

(30) Priority: 22.05.2025 IN 202511049389
(71) Applicant: Honeywell International Inc., Charlotte, NC 28202 (US)
(72) Inventor: PRAKASH, Suraj, Charlotte 28202 (US); RAPOLU, Usha Rani, Charlotte 28202 (US); ARADHYULA, Venkata Gopala Vamsee Krishna, Charlotte 28202 (US); T K, Zera, Charlotte 28202 (US)
(74) Representative: Haseltine Lake Kempner LLP

(57) **Abstract**

A method of hybrid dictionary based migration for PLC control systems can comprise maintaining a default dictionary, maintaining a custom dictionary, and receiving a source PLC code to be migrated. For each component in the source PLC code, the method can include identifying whether the component has a mapping in the default dictionary or in the at least one custom dictionary. When a mapping exists for a component, the method can include converting the source PLC code for the component to target PLC code using the identified mapping. When a mapping does not exist, the method can include prompting a user to update the at least one custom dictionary with a new mapping for the component and converting the source PLC code for the component to the target PLC code using the new mapping. The method can include outputting the converted target PLC code.

## Description

### TECHNICAL FIELD

This disclosure generally relates to industrial process control and automation systems. More specifically, this disclosure relates to an apparatus and method for hybrid dictionary based migration of PLC control systems.

### BACKGROUND

Industrial process control and automation systems are typically used to monitor and control complex and potentially volatile industrial processes without interruption, often running without scheduled downtime for years. Over time, a need may arise to upgrade one or more components in an industrial process control and automation system. This could be due to various factors, such as the desire to obtain improvements provided by new products or the need to replace obsolete products or address support issues. For instance, some industrial process control and automation systems rely on programmable logic controllers (PLCs) that implement a given international standard (e.g., an IEC-61131-3 standard) for programming languages. While the given international standard provides a common framework, its implementation can vary significantly across different vendors, systems, and applications.

PLCs are components in industrial automation, enabling the monitoring and control of complex manufacturing and processing operations. These controllers execute programmed logic through various standard function blocks and components defined by IEC-61131-3, as well as custom-developed components created by system integrators and end users. The programming of PLCs typically involves both standard (e.g., IEC-61131-3) elements and custom (e.g., proprietary) implementations, including custom function blocks, user-defined data types, and/or specialized program logic written in structured text, ladder diagrams, or function block diagrams. Both the standard and custom implementations use the IEC-61131-3 language e.g., maintain compliance with the base (e.g., IEC-61131-3) standard. Modern industrial facilities often operate with multiple PLCs from different vendors, requiring interoperability between diverse implementations of the standard (e.g., IEC-61131-3).

### SUMMARY

As mentioned, the programming of PLCs typically involves both standard (e.g., IEC-61131-3) elements and custom (e.g., proprietary) implementations. Without tools capable of handling custom component conversion, organizations must undertake a resource-intensive manual migration process. This imposes significant financial burdens as substantial resources in terms of time and money must be allocated to ensure accurate transfer of custom elements. Manual migration is inherently error prone as each custom component must be meticulously analyzed, understood, and manually replicated in the new environment. Even experienced programmers make mistakes when dealing with complex proprietary code, leading to system malfunctions, operational inefficiencies, and increased downtime that further magnify costs. The manual approach also results in deployment delays. As components are painstakingly converted one by one, project timelines extend, causing delays in bringing new systems online. These delays impact production schedules, postpone modernization benefits, and ultimately affect the organization's bottom line.

Moreover, various existing migration tools can only handle standard IEC-61131-3 components but not custom or proprietary components. IEC-61131-3 is an international standard for programmable logic controllers, but there is significant lack of uniformity in its application across vendors and systems. The same function block may be implemented differently across various databases or programs.

This technical limitation creates a situation where the non-standard components must be manually migrated when changing PLC systems. The components vary not only between different PLC configuration tools but also between different system integrators and programmers, making automated migration particularly challenging. Current tools lack the capability to intelligently convert these custom PLC components in the same way they handle standard PLC components.

Accordingly, this disclosure provides an apparatus and method for migration from various current (e.g., legacy, alternate, etc.) control systems to modern and/or proprietary control systems. More specifically, the disclosure provides an intelligent migration tool for converting both standard and custom/proprietary PLC components between different systems using hybrid dictionaries. The migration tool includes a default (i.e., industry standard) dictionary for mapping standard (e.g., IEC-61131-3) components and allows users to create custom dictionaries for proprietary components, for instance, by duplicating and modifying the default dictionary. During migration, the system leverages contextual information to recommend optimal conversion mappings and prompts users to update custom mappings when new components are identified. In some embodiments the systems herein can permit a user to merge multiple map files (e.g., multiple IEC 61131 map files) such as those from two or more dictionaries into an individual map file (e.g., an individual IEC 61131 map file) and/or to create (e.g., add, modify, or create) a mapping in one or more dictionaries (e.g., modify or create an entire new custom dictionary). The migration tool integrates seamlessly with PLC configuration environments through an interface such as a widget interface, supports flexible storage options with access controls to maintain IP protection, and permits efficient batch migration of multiple files using one or more (e.g., one or more prioritized) dictionaries. This automated approach significantly reduces the manual effort and potential errors involved in migrating custom components, which traditionally required resource-intensive manual conversion, while preserving functionality and intellectual property rights across different vendor platforms, as detailed herein.

The preceding summary is provided to facilitate an understanding of some of the innovative features unique to the present disclosure and is not intended to be a full description. A full appreciation of the disclosure can be gained by taking the entire specification, claims, figures, and abstract as a whole. Other technical features may be readily apparent to one skilled in the art from the following figures, descriptions, and claims.

### BRIEF DESCRIPTION OF DRAWINGS

For a more complete understanding of this disclosure, reference is now made to the following description, taken in conjunction with the accompanying drawings, in which:
FIG. 1 is a schematic block diagram of an illustrative industrial process control and automation system;
FIG. 2 illustrates an example device for hybrid dictionary based migration of PLC control systems;
FIG. 3A illustrates an example flow for hybrid dictionary based migration of components in PLC control systems;
FIG. 3B illustrates an example flow for hybrid dictionary based migration of components including locked components in PLC control systems;
FIG. 4 illustrates an example flow for hybrid dictionary based migration in PLC control systems;
FIG. 5 illustrates another example flow for hybrid dictionary based migration in PLC control systems;
FIG. 6 illustrates an additional example model for hybrid dictionary based migration in PLC control systems; and
FIG. 7 illustrates an example method for hybrid dictionary based migration in PLC control systems.

### DETAILED DESCRIPTION

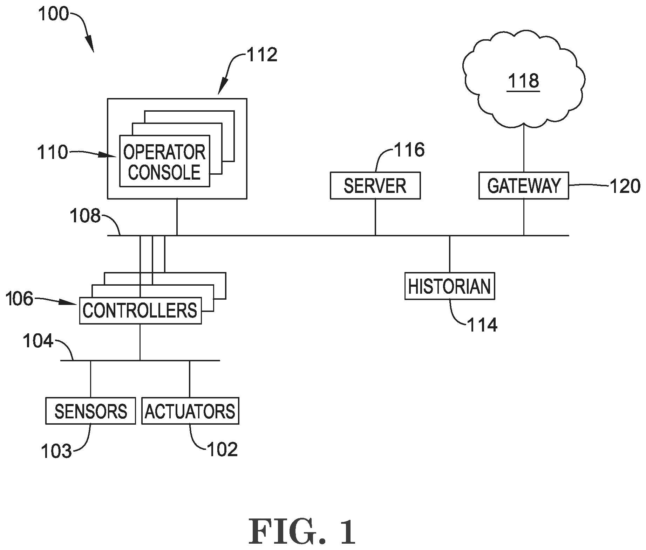

FIGS. 1 through 7, discussed herein, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Industrial automation is an important feature of today's industrial processing plants. There is a need for industrial automation systems to continually provide greater flexibility in the implantation and operation of industrial automation systems.

Over time, a need to upgrade (e.g., replace hardware and/or alter or update instructions in the form of software, firmware, etc.) one or more components in an industrial process control and automation system. For instance, when a site is created or altered (e.g., expanded to include new building equipment, etc.) and/or a PLC controller is replaced there may arise a need to upgrade a component such as a PLC controller, among other possibilities.

As used herein, the terms "migration" and "replacement" (and their derivatives) can refer to software migration rather than hardware changes. That is, the physical hardware of a controller may remain unchanged. Additionally, the terms "migration" and "replacement" (and their derivatives), when used with reference to a controller, include both a physical replacement of the controller with a modern or enhanced controller and the integration of the modern controller within the system. In either context, the migration can include mapping source code of one or more components (e.g., PLC source code) of the control systems (e.g., PLC controllers) to corresponding source code in the new control systems.

As mentioned, the components can include standard components and non-standard (i.e., customized and/or proprietary) components.

As used herein, standard components refer to components that are defined by a particular industry (e.g., international) specification. As an example, the standard components may be defined by the IEC-61131-3 specification. Examples of standard components include standard function blocks, elementary data types, and standard programming language elements, among others. Standard function blocks can include pre-defined processing elements like timers (TON, TOF), counters (CTU, CTD), and mathematical operation blocks (ADD, SUB, MUL, DIV) that perform specific functions according to the IEC-61131-3 standard, etc. Elementary data types can include integer (INT, SINT, DINT), Boolean (BOOL), real numbers (REAL), time values (TIME), and other standard data types defined in the specification. Standard programming language elements can include common constructs in languages such as ladder diagram (LD): standard contacts, coils, and power rails, function block diagram (FBD) such as standard interconnection paths and execution flow elements, and structured text (ST) such as standard keywords (IF, THEN, ELSE, FOR) and operators, etc.

As used herein, non-standard components refer to components that are not defined by a particular industry (e.g., international) specification. Examples of non-standard components include those that are customized (e.g., proprietary) such as those that include non-standard customized source code and/or other non-standard configurations. Examples of non-standard components include custom function blocks, user-defined data types, , and user-defined program logic, among others. Custom function blocks can include function blocks developed by system integrators or end customers that implement specialized operations such as a custom PID controller with proprietary algorithms, a specialized diagnostic function block for equipment monitoring, and/or vendor-specific communication blocks for interfacing with particular hardware. User-defined data types can include custom data structures created for specific applications such as derived data types (structs) containing multiple elements, enumerated types specific to a process or machine, and/or custom arrays or configurations optimized for particular operations. Examples of user-defined program logic can include complete logic sequences written in various IEC-61131-3 languages such as custom control sequences in structured text, specialized machine sequences in sequential function chart (SFC), custom ladder routines for specific operations, and/or function block diagrams with proprietary interconnections.

A first representative example is a method of hybrid dictionary based migration in PLC control systems, the method comprising: maintaining a default dictionary that maps standard components to corresponding implementations in a target PLC system; maintaining at least one custom dictionary that maps custom components to corresponding implementations in the target PLC system; receiving a source PLC code to be migrated; for each component in the source PLC code: identifying whether the component has a mapping in the default dictionary or in the at least one custom dictionary; when a mapping exists for a component in the default dictionary or in the at least one custom dictionary, converting the source PLC code for the component to target PLC code using the identified mapping; and when a mapping does not exist in any of the dictionaries for the component: prompting a user to update the at least one custom dictionary with a new mapping for the component; and converting the source PLC code for the component to the target PLC code using the new mapping; and outputting the converted target PLC code (e.g., to a PLC controller, etc.)

Another representative example is an apparatus comprising: at least one processor configured to: maintain a default dictionary that maps standard components to corresponding implementations in a target PLC system; maintain at least one custom dictionary that maps custom components to corresponding implementations in the target PLC system; receive a source PLC code to be migrated; for each component of a plurality of components in the source PLC code: identifying whether the component has a mapping in the default dictionary or in the at least one custom dictionary; and i) when an individual mapping exists for a component, converting the source PLC code for the component to target PLC code using the identified mapping; and ii) when multiple potential migration mappings exist for a component, recommending an optimal conversion mapping; or iii) when a mapping does not exist for the component: prompting a user to update the at least one custom dictionary with a new mapping for the component; and converting the source PLC code for the component to the target PLC code using the new mapping; and automatically converting each of the plurality of components in the source PLC code to target PLC code using the mappings; and outputting the converted target PLC code.

Another representative example is a non-transitory, computer-readable medium including instructions that when executed by a processor cause the processor to: maintain a default dictionary that maps standard components to corresponding implementations in a target PLC system; maintain at least one custom dictionary that maps custom components to corresponding implementations in the target PLC system; receive a source PLC code to be migrated; for each component of a plurality of components in the source PLC code: identifying whether the component has a mapping in the default dictionary or in the at least one custom dictionary; and i) when an individual mapping exists for a component, converting the source PLC code for the component to target PLC code using the identified mapping; and ii) when multiple potential migration mappings exist for a component, recommending an optimal conversion mapping; or iii) when a mapping does not exist for the component: prompting a user to update the at least one custom dictionary with a new mapping for the component; and converting the source PLC code for the component to the target PLC code using the new mapping; and automatically converting each of the plurality of components in the source PLC code to target PLC code using the mappings; and outputting the converted target PLC code.

FIG. 1 provides a schematic block diagram showing an illustrative industrial process control and automation system 100 suitable for hybrid dictionary based migration in PLC control systems. The system 100 includes various components that facilitate production or processing of at least one product or other material with various building equipment (e.g., a rotary motor, rotary shaft and/or another type of rotating equipment). For instance, the system 100 can be used to facilitate control over components in one or multiple industrial plants. The industrial plants may be one or more processing facilities (or one or more portions thereof), such as one or more manufacturing facilities for producing at least one product or other material or entity. In general, the industrial plants may implement one or more industrial processes and can individually or collectively be referred to as a process system. A process system generally represents any system or portion thereof configured to process one or more products (e.g., generated energy which can be distributed to other parts of the industrial plant or otherwise sold) or other materials in some manner.

The system 100 includes one or more sensors 103 and one or more actuators 102. The sensors 103 and the actuators 102 represent components in a process system that may perform any of a wide variety of functions. In certain embodiments, sensors 103 and actuators 102 can correspond to equipment that is controlled by the automation system. That is, the sensors 103 and actuators 102 represent components in the industrial plant that perform any of a wide variety of functions. For example, sensors and actuators can measure various characteristics of the process system as well as alter any number of characteristics in the process system of the industrial plant represented by the system 100. The sensors 103 and actuators 102 can be automatically controlled by the process system of the industrial plant (e.g., to permit autocorrection of building equipment failures, as detailed herein), manually controlled, or a combination thereof. The control and manipulation of the sensors 103 by the personnel or the process system of the industrial plant, or the combination thereof can be recorded by the historian, discussed in further detail below. For example, each time the sensors 103 and actuators 102 are adjusted, a record is created within the historian. The sensors 103 may measure a wide variety of characteristics in the process system, such as but not limited to temperature, pressure, flow rate, chemical concentrations, a switch (e.g., a limit switch, a proximity switch, etc.), or a voltage transmitted through an electrical conductor. The actuators 102 may represent devices that are configured to alter a wide variety of characteristics in the process system. As an example, the actuators 102 may open or close one or more valves, alter the characteristics or physical positions of various components such as a relay and/or a solenoid, and/or increase or decrease a process set point or the like. At any rate, each sensor 103 may include any suitable structure for measuring one or more characteristics in a process system. Each actuator 102 may include any suitable structure for operating on or affecting one or more conditions of a process system.

In the example shown, a network 104 is coupled to the sensors 103 and the actuators 102. The network 104 facilitates interaction with the sensors 103 and the actuator 102. For example, the network 104 may transmit measurement data from the sensors 103 and/or may provide control signals to the actuator 102. The network 104 may represent any suitable network or combination of networks. As particular examples, the network 104 could represent at least one Ethernet network (such as one supporting a Ethernet/IP, ProfiNET and/or EtherCAT protocol), electrical signal network (such as a HART network), Ethernet network, pneumatic control signal network, or any other or additional type(s) of network(s), or any other type of communication path.

The illustrative system 100 also includes various controllers 106. The controllers 106 may, for example, be used in the system 100 to perform various functions in order to control one or more industrial processes and/or building equipment (e.g., motor, turbine, or compressor, etc.). To illustrate, a first set of controllers 106 may use measurements from one or more of the sensors 103 to control the operation of one or more of the actuators 102. A controller 106 may receive measurement data from one or more sensors 103 and use the measurement data to generate control signals for one or more actuators 102. A second set of controllers 106 may be used to optimize the control logic or other operations performed by the first set of controllers. A third set of controllers 106 could be used to perform additional functions. The controllers 106 could therefore support a combination of approaches, such as regulatory control, advanced regulatory control, supervisory control, and advanced process control.

Each of the controllers 106 may include any suitable structure for controlling one or more aspects of an industrial process. At least some of the controllers 106 may, for example, represent proportional-integral-derivative (PID) controllers or multivariable controllers, such as controllers implementing model predictive control (MPC) or other advanced predictive control (APC). As a particular example, each controller of the controllers 106 may represent a computing device running a real-time operating system, a WINDOWS operating system, or other operating system.

In the illustrative system 100, at least one network 108 couples to the controllers 106 and the other devices in the system 100. The network 108 facilitates communication of information between components. The network 108 may represent any suitable network or combination of networks. For example, the network 108 could represent an Ethernet network or any other suitable communication path.

Operator access to and interaction with the controllers 106 and other components of the system 100 can occur via various operator consoles 110. Each operator console 110 may be used to provide information to an operator and receive information from an operator. For example, each operator console 110 may provide information identifying a current state of an industrial process to the operator, such as values of various process variables and warnings, alarms, or other states (e.g., monitored rotational speed data of building equipment, etc.) associated with the industrial process. Each operator console of the operator consoles 110 may also receive information affecting how the industrial process is controlled, such as by receiving set points or control modes for process variables controlled by the controllers 106 or other information that alters or affects how the controllers 106 control the industrial process. Each operator console 110 may include any suitable structure for displaying information to and interacting with an operator. For example, each operator console 110 may represent a computing device running a WINDOWS operating system or other operating system. In some embodiments, the operator console 110 can be configured to display the dashboards described herein. Alternatively or additionally, the dashboards described herein can be displayed elsewhere, for instance, at a console associated with a supervisor or other personal associated with the industrial plant.

Multiple operator consoles 110 may be grouped together and used in one or more control rooms 112. Each control room 112 may include any number of operator consoles 110 in any suitable arrangement. In some cases, multiple control rooms 112 may be used to control an industrial plant, such as when each control room 112 contains operator consoles 110 used to manage a discrete part of the industrial process/plant.

The illustrative system 100 also includes one or more servers 116. Each server 116 denotes a computing device that executes applications for users of the operator consoles 110 or other applications. The applications could be used to support various functions for the operator consoles 110, the controllers 106, or other components of the system 100. The servers 116 may be located locally or remotely from the illustrative system 100. For instance, the functionality of the server 116 could be implemented in a computing cloud or a remote server communicatively coupled to the system 100 via a gateway such as gateway 120. Each server 116 may represent a computing device running a WINDOWS operating system or other operating system. Note that while shown as being local within the system 100, the functionality of the server 116 may be remote from the system 100. For instance, the functionality of the server 116 may be implemented in a cloud-based server 118 or a remote server communicatively coupled to the system 100 via the gateway 120.

The control and automation system 100 here also includes at least one historian 114. The historian 114 represents a component that stores various information about the system 100. The historian 114 could, for instance, store information that is generated by the various controllers and/or various operators, etc. during the control of one or more industrial processes. The historian 114 includes any suitable structure for storing and facilitating retrieval of information such as a volatile and/or non-volatile memory. Although shown as a single component here, the historian 114 could be located elsewhere in the system 100, or multiple historians could be distributed in different locations in the system 100.

Although FIG. 1 shows one example of the industrial process control and automation system 100, it will be appreciated that various changes may be made. For example, the control and automation system 100 may include any number of sensors, actuators, controllers, servers, networks, operator stations, operator consoles, control rooms, networks, and other components. Also, the makeup and arrangement of the system 100 in FIG. 1 is for illustration only. Components may be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, FIG. 1 illustrates one example operational environment of an industrial plant where system operations done by the various personnel can be monitored. This functionality can be used in any other suitable system, and that system need not be used for industrial process control and automation.

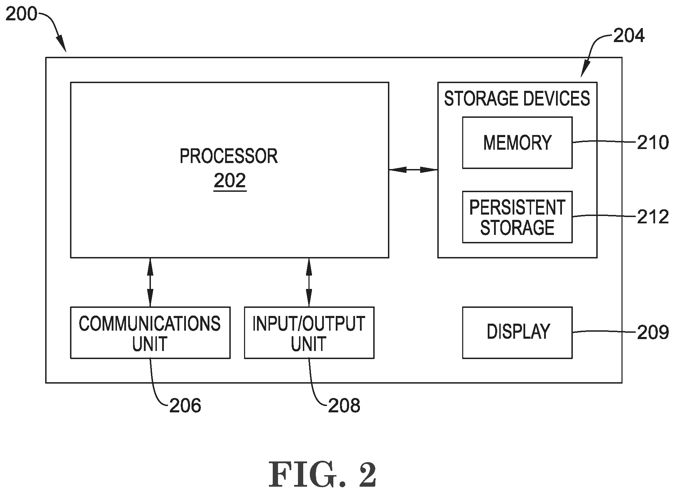

FIG. 2 illustrates an example computing device for hybrid dictionary based migration in PLC control systems. In particular, FIG. 2 illustrates an example computing device 200. In some embodiments, the computing device 200 could denote an operator station, server, a remote server or device, or a mobile device. The computing device 200 could be used to run applications. The computing device 200 could be used to perform one or more functions, such as collecting information, sorting and analyzing the information as well as generating a report of the analysis, and/or initiating hybrid dictionary based migration from the various PLC control systems to modern and/or proprietary PLC control systems, etc.). For ease of explanation, and the computing device 200 are described as being used in the system 100 of FIG. 1, although the computing device 200 could be used in any other suitable system (whether or not related to industrial process control and automation).

As shown in FIG. 2, the computing device 200 includes at least one processor 202, at least one storage device 204, at least one communications unit 206, and at least one input/output (I/O) unit 208. Each processor 202 can execute instructions, such as those that may be loaded into a memory 210. Each processor 202 denotes any suitable processing device, such as one or more processors (e.g., microprocessors), microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) configured to store and facilitate retrieval of information (such as data, program code, and/or other suitable information on a temporary or permanent basis). The memory 210 may represent a random-access memory or any other suitable volatile or non-volatile storage device(s). The persistent storage 212 may contain one or more components or devices supporting longer-term storage of data, such as a read-only memory, hard drive, flash memory, or optical disc.

The communications unit 206 supports communications with other systems or devices. For example, the communications unit 206 could include at least one network interface card or wireless transceiver facilitating communications over at least one wired or wireless network (such as a local intranet or a public network like the Internet). The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display such as a display 209, printer, or other suitable output device.

The display 209 allows at least output of data. In some instances, the display 209 corresponds to a monitor. In some embodiments, the display 209 corresponds to a touch screen display that allows input and output of data.

Although FIG. 2 illustrates example computing device 200 capable of facilitating or otherwise performing at least some aspects of for hybrid dictionary based migration from various PLC control systems to modern and/or proprietary PLC control systems, changes may be made to FIG. 2. For example, various components in FIG. 2 could be combined, further subdivided, or omitted, and additional components could be added according to particular needs. As a particular example, processor 202 can be divided into multiple processors (e.g., hardware processors), such as one or more central processing units (CPUs) and one or more graphics processing units (GPUs). Also, computing device 200 can come in a wide variety of configurations, and FIG. 2 does not limit this disclosure to any particular computing device or mobile device.

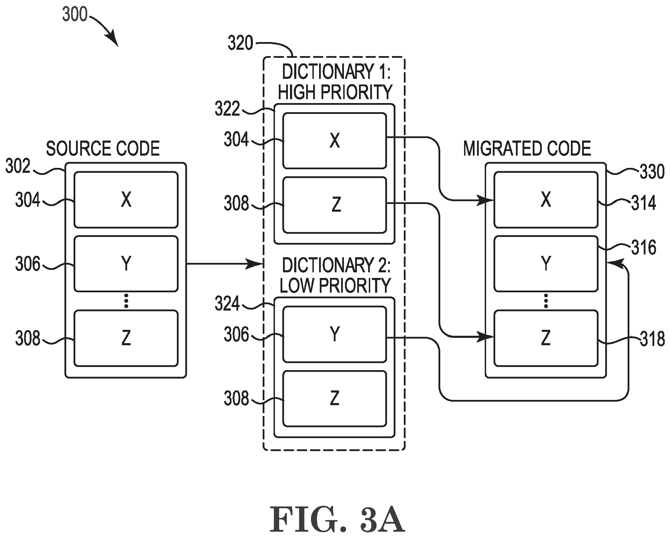

FIG. 3A illustrates an example flow 300 for hybrid dictionary based migration of components in PLC control systems. Specifically, FIG. 3A shows an example of how the hybrid dictionary migration systems herein (e.g., including a default dictionary and at least one custom dictionary) handle source components through the multiple dictionaries with different priority levels. While some examples herein employ two dictionaries, the present disclosure is not so limited. Rather any quantity of dictionaries may be employed (e.g., one or more custom dictionaries and one or more standard dictionaries may be employed).

Source (e.g., 61131) code container 300 represents the original source code containing components to be migrated. It serves as the input to the migration process. The components can include any quantity of components. For instance, the components can include a first component (component X) 304, a second component (component Y) 304, and a third component (component Z) 308. Each component represents an individual programmable logic controller component in the existing system that requires migration. The components can be the same type or different types of components. For instance, the second and third components can each of a different functionality than the first component.

As detailed herein, a determination can be made whether the component is included in one or more dictionaries. For instance, a first determination can be made whether the component is in a default dictionary and a second determination can be made whether the component is included in any one of the one or more custom dictionaries. Alternatively, in some embodiments a determination can be made whether the component is included in any one of the default dictionary or one or more of the custom dictionaries.

A first dictionary (Dictionary 1) 322 can be the default dictionary. Additionally, one or more custom dictionaries such as a second dictionary (Dictionary 2) 324 can be stored in a computing device such as those described herein.

A priority order can be maintained among the default dictionary and the one or more custom dictionaries. The first dictionary 322 can be a standard (i.e., default) dictionary having a first priority that is a higher priority a second priority associated with the second dictionary 324. Making the standard/default dictionary a higher priority than the custom dictionary yields promotes aspects herein such as standardization and interoperability, reliability and stability, consistent behavior, reduced technical debt, backward compatibility, and/or simplifies dictionary management. For instance, regarding standardization, the standard/default dictionary contains mappings for components that adhere to the IEC-61131-3 international standard. Prioritizing these standardized mappings ensures that whenever there's a conflict between standard and custom implementations, the system defaults to the industry-standard approach. This promotes greater interoperability between different systems and vendors, as standard implementations are more likely to be compatible across different PLC platforms. Regarding reliability and stability the standard components have typically undergone more extensive testing and validation by both standards bodies and industry participants. By prioritizing standard mappings, the system chooses implementations that have been more thoroughly vetted when a conflict exists, leading to more reliable migrations with fewer potential issues. Regarding consistent behavior when components (e.g., the third component exists in both the first dictionary 322 (high priority) and the second dictionary 324 (low priority), the high-priority dictionary's mapping is used. Since the default dictionary is given high priority, this ensures consistent behavior across migrations even when custom dictionaries are introduced. This consistency is especially valuable when migrating complex systems where predictable behavior is essential. Regarding reduced technical debt, by prioritizing standard implementations over custom ones when conflicts exist, the system encourages alignment with industry standards. This inherently reduces technical debt in the migrated system, as it minimizes reliance on custom implementations that may require specialized knowledge or maintenance in the future. Regarding backwards compatibility, by prioritizing the default dictionary, the system helps ensure backward compatibility with standard components while still supporting custom elements when necessary. Regarding simplified dictionary management, making the default dictionary a higher priority simplifies the management of custom dictionaries. Users can create custom dictionaries that only need to contain mappings for truly custom components, rather than having to duplicate standard mappings with potential modifications.

Similarly, when a plurality of custom dictionaries are present a sub-priority order among the custom dictionaries can be maintained. For instance, each custom dictionary can have a different respective priority than the other custom dictionaries and each of the priorities of the custom dictionaries can have a priority that is less than a priority of the default dictionary. Accordingly, when multiple potential migration mappings exist for a component (i.e., a corresponding mapping is available in two or more dictionaries), this conflict can be resolved based on the priority orders of the dictionaries. Namely, to select a highest priority mapping from the multiple potential migration mappings for the particular component that are present in one of the default dictionary or the at least one dictionary. Stated differently, when multiple potential migration mappings exist for a component, further comprising resolving conflicts between the multiple potential migration mappings based on the priority order to select a highest priority mapping in one of the default dictionary or the at least one dictionary.

For instance, with continued reference to FIG. 3A, the first component 304 (component X) can be mapped to the first dictionary 322 which contains the mapping information for the first component 304. This mapping or mapping information defines how the first component 304 should be translated to the target system. As the first component 304 only includes a mapping in the first dictionary 322, there is no conflict with any mappings in the second dictionary 324.

Similarly, the second component 306 (component Y) can be mapped to the second dictionary 324 which contains the mapping information for the second component 306. This mapping or mapping information defines how the second component 306 should be translated to the target system. As the second component 306 only includes a mapping in the second dictionary 324, there is no conflict with any mappings in the first dictionary 322.

However, the third component (component Z) 308 has mappings in both the first dictionary 322 and the second dictionary 324 (e.g., as illustrated in FIG. 3A by the presence of the "Z" in both the first and second dictionaries). As mentioned, the first dictionary 322 has a higher priority than a priority of the second dictionary 324. Hence, the highest-priority mapping for the third component 308 is present in the first dictionary 322. Accordingly, the third component 308 will be mapped using the mapping from the first dictionary 322.

As illustrated in FIG. 3A, the migrated (e.g., 61131 code) therefore includes three corresponding migrated components in their new formats. Specifically, the first component 304 has been migrated to a migrated code container 314, with its code being derived from the mapping in the first dictionary 322, the second component 306 has been migrated to a migrated code container 316, with its code being derived from the mapping in the second dictionary 324, and third component 308 has been migrated to a migrated code container 318, with its code being derived from the mapping in the first dictionary 322. This is merely an example to demonstrate an instance of how the migration tool herein can intelligently handle both standard and non-standard components even when multiple definitions exist, ensuring consistent and predictable migration results by adhering to a clearly defined priority hierarchy.

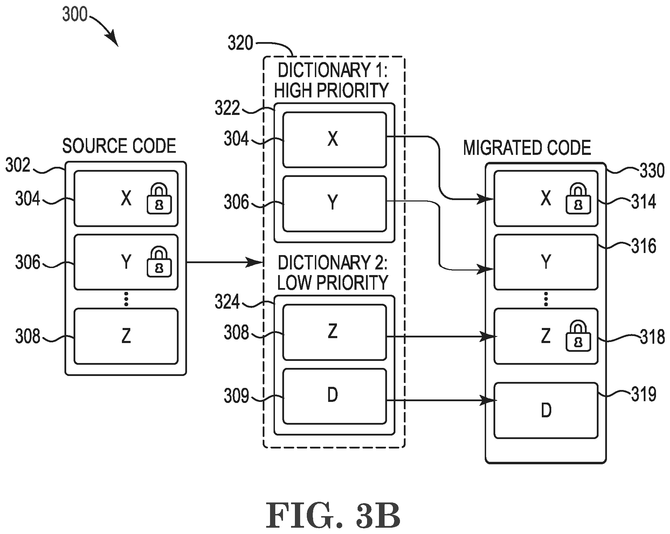

FIG. 3B illustrates an example flow for hybrid dictionary based migration of components including locked components in PLC control systems. FIG. 3B is similar to FIG. 3A, with the change that some of the components are locked components and that the dictionaries are different.

As used herein, a component being locked refers to the mappings being not available to be modified when migrating the components. That is, the presence or absence of locking mechanism changes how components are mapped during migration, as detailed herein. For example, as illustrated in FIG. 3B, a first component (component X) and a second component (component Y) are locked in the source code, while a third component (component Z) is unlocked.

In FIG. 3B, the first dictionary 322 is a non-default dictionary associated with a first component (company A) which is integrated with GIT per their access control policy, while the second dictionary 324 is a non-default dictionary associated with a second component (company B) in a localized file as per their access control policy. That is, these dictionaries belonging to Company A and Company B have been customized for these organizations' particular needs including employing different storage implementations (GIT integration vs. local file), containing company-specific access control settings (B is unlocked in Company A's dictionary, while C is locked in Company B's dictionary). Hence, these company-specific dictionaries represent examples of custom dictionaries that users can create to handle proprietary components, as opposed to the default dictionary that contains industry standard (e.g., IEC-61131-3) component mappings. While various examples herein reference a GIT integration the disclosure is not so limited and can be implemented with any suitable implementation and/or programming such as a SharePoint implementation, etc.

With continued reference to FIG. 3B, the first dictionary 322 of Company A gives access to the relevant mappings for X and Y, while the second dictionary of Company B gives access to the relevant mappings for Z and D. As detailed herein, the migration tool can parse information from both dictionaries and migrates at least each of components X, Y and Z based on the mappings (highest priority mappings) in the dictionaries.

Specifically, the first component 304 has been migrated to a migrated code container 314, with its code being derived from the mapping in the first dictionary 322, the second component 306 has been migrated to a migrated code container 316, with its code being derived from the mapping in the first dictionary 322, and third component 308 has been migrated to a migrated code container 318, with its code being derived from the mapping in the second dictionary 324.

Notably, the migrated code container 314 (component X) remains locked in the migrated code as it is locked in the source code 302. In such cases, for the source code 302 or parts of it that or locked or inaccessible, a user can create an equivalent code block (e.g., in the destination system) and can add mapping file entries in one or more dictionaries to define the migration or translation rules for the locked source code (e.g., based on an exposed name and/or other attributes of the locked source code). This allows that protected or inaccessible source code to be migrated while remaining protected in the destination in the migrated code 330. Similarly, the migrated code container 318 (component Z) is locked in the migrated code 330 because, although it is initially unlocked in the source code 302, it is translated using a mapping to a locked destination element in the migrated code 330, as indicated in FIG. 3B. That is, the systems and method permit a creator(s) of a map file to lock it for various purposes like standardization, translation accuracy etc. However, the migrated code container 316 (component Y) is unlocked as it is translated using a mapping to an unlocked destination element, despite the second component 306 being initially locked in the source code 302, as illustrated in FIG. 3B. Hence, the systems and methods described herein can support various translation mechanisms, including: i) translating locked source code to a locked destination element in the migrated code, ii) translating locked source code to an unlocked destination element, iii) translating unlocked source code to a locked destination element, and iv) translating unlocked source code to an unlocked destination element.

Additionally, in some instances, extra code can be included in the migrated code 330. For example, the migrated code 330 may include code container 319 corresponding to a mapping 309 found in one or more dictionaries, even if no corresponding code component exists in the initial source code 302.

Aspects of the present disclosure can be manifested in a variety of manners such as integration into a PLC configuration/builder tool and/or integration into a widget, among other possibilities.

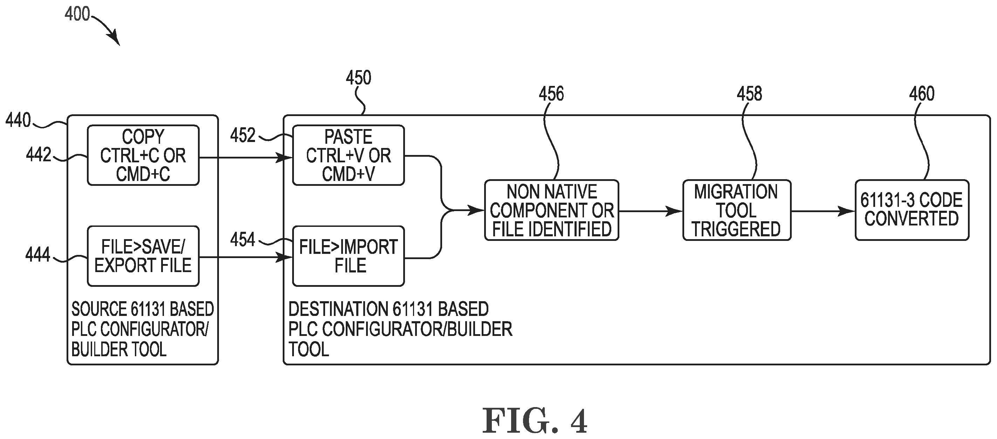

FIG. 4 illustrates an example flow 400 for hybrid dictionary based migration in PLC control systems. The flow 400 can be performed with one or more of the devices, apparatus, and systems herein.

Users can copy PLC code from the source PLC configuration/builder tool 440 and paste it into a destination PLC configuration/builder tool 450, which triggers the migration tool in the background to convert the logic to the new builder, significantly reducing migration time in scenarios such as partial PLC code migration. For instance, element 442 represents a copy action icon or other type of indicator providing such functionality. This element initiates the first path in the migration workflow through direct clipboard operations. Element 450 represents a destination PLC building tool and an associated destination work workflow. Element 452 is a paste icon or other type of element provide such functionality. Element 452 therefore works in conjunction with element 442 to collectively provide a copy and paste function of source code and/or one or more components to initiate hybrid dictionary based migration from a current PLC control systems to modern and/or proprietary PLC control systems.

A similar interaction can also be triggered by users importing a third-party PLC configuration/builder tool file into the source PLC configuration/builder tool 440 with minimal inputs. Element 444 represents file save/export file icon or other type of indicator providing such functionality. Element 454 is an import icon or other type of element provide such functionality. Element 454 therefore works in conjunction with element 444 to collectively provide an export and import function of source code and/or one or more components to initiate hybrid dictionary based migration from various PLC control systems to modern and/or proprietary PLC control systems.

In either case, the source code or one or more components can be evaluated by the destination PLC configuration/builder tool 450. For instance, the presence of any non-standard components (non-native components) can be identified as indicated at 456. This identification can be performed to evaluate whether any of the components are not present in a default dictionary such as those described herein. As 458, the destination PLC configuration/builder tool 450 can perform migration of the one or more components, as detailed herein. At 460, the migrated components can be output and/or stored, as detailed herein. For instance, the migrated components can be provided to and stored at a controller (e.g., a PLC controller) to control one or more aspects of an industrial process.

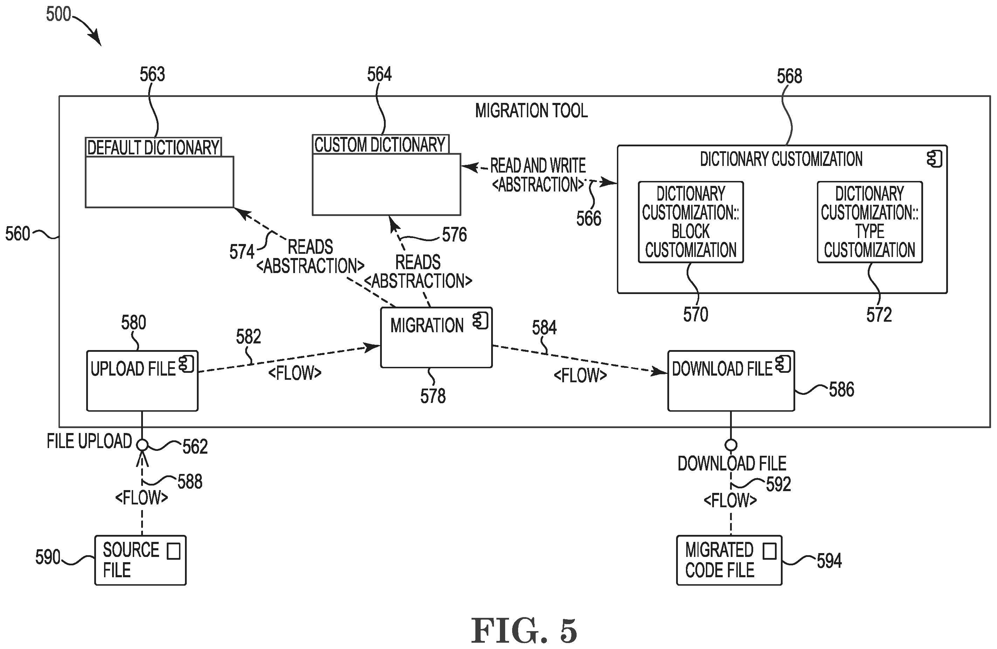

FIG. 5 illustrates another example flow 500 for hybrid dictionary based migration in PLC control systems. The flow 500 can be performed with one or more of the devices, apparatus, and systems herein.

As illustrated in FIG. 5, the flow includes a migration tool container 560 which serves as the main framework within which all the migration operations occur and components interact. The migration tool container 560 includes a default dictionary 563 and a custom dictionary 564. As mentioned, the default dictionary 563 stores standard mappings for IEC-61131-3 components that come pre-configured with the system. Stated differently, the default dictionary is delivered "out of the box" and contains mappings for standard PLC components that adhere to the IEC-61131-3 standard. As mentioned, the custom dictionary 564 represents one or more user-created customized dictionaries containing mappings for proprietary or custom components. The one or more custom dictionary 564 dictionaries are created by users to handle components that aren't covered by the standard mappings in the default dictionary 563.

The migration tool container 560 includes a dictionary customization container 568, dictionary customization block 570, and a dictionary customization type 572. The dictionary customization container 568 is a container element that houses the customization functionality, allowing users to create or modify custom dictionaries. The dictionary customization block 570 container handles the customization of function blocks within dictionaries. It allows users to create mappings for custom code blocks and functionality. The dictionary customization type 572 container manages the customization of data types within dictionaries, allowing users to create mappings for custom data structures.

The migration tool container 560 includes a migration component 578 and an upload file component 580. The migration component 578 represents the core conversion logic that translates current PLC code to new and/or proprietary PLC code. It utilizes the mapping data available in both the Default Dictionary and Custom Dictionary components. The upload file component 580 represents the file upload functionality that allows users to select and import source PLC code files for migration.

The migration tool container 560 includes a download file component 586, a source file 590, and a migrated code file 594. The download file component icon represents the functionality for users to save or export the migrated PLC code after conversion is complete. The source file 590 represents the external file containing the current PLC code that will be processed for migration to the modern and/or proprietary code. The source file 590 is the input to the entire migration process. The migrated code file 594 represents the output file containing the migrated PLC code after processing. The migrated code file 594 is the final result of the migration process.

The migration tool container 560 is illustrated with various arrows which are indicative of typical flows within the migration tool container. Examples include a read and write flow arrow 566, a read arrow (from the default dictionary) 574, a read arrow (from the custom dictionary) 576, a flow arrow (upload to migration) 582, a flow arrow (migration to download) 584, a file upload arrow 588, and a file download arrow 592. The read and write flow arrow 566 represents the bidirectional data flow between the dictionary customization component and both dictionary types, indicating that the customization module can both read from and modify the dictionaries. The read arrow (from the default dictionary) 574 shows that the migration component reads mapping information from the default dictionary when performing translation operations. The read arrow (from the custom dictionary) 576 indicates that the migration component also reads mapping information from the custom dictionary. The flow arrow (upload to migration) 582 shows the data movement from the Upload File component to the migration component, indicating that uploaded files are passed to the migration logic for processing. The flow arrow (migration to download) 584 represents the flow of converted code from the migration component to the download file component. The file upload arrow 588 shows the external connection for uploading source files into the system. The file download arrow 592 shows the external connection for downloading the processed files from the system.

An example data flow in the migration tool container 560 is described as follows. A source files 590 is introduced to the system through the file upload process 588 to the upload file component 580. The uploaded files are passed 582 to the migration component 578. The migration component 578 reads mapping information from both the default dictionary 563 and custom dictionary 564 via the respective read connections 574, 576. The dictionary customization component 568 allows users to create and modify dictionary entries through bidirectional communication 566 with both dictionary types. After processing, the migration component 578 sends the converted code 584 to the download file component 586. The converted code is then made available as a migrated code file 594. This is merely an example. The example flow represents how the tool processes source PLC code through a migration pipeline that leverages both standard and custom dictionary mappings to produce properly translated output code while maintaining the relationships between components.

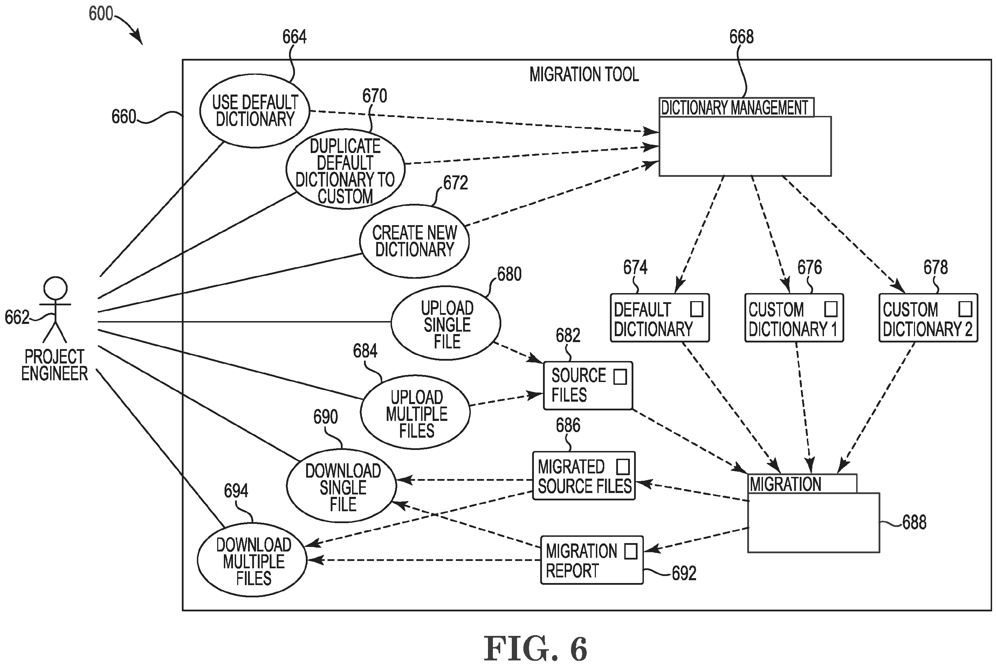

FIG. 6 illustrates an additional example model 600 for hybrid dictionary based migration in PLC control systems. The flow 600 can be performed with one or more of the devices, apparatus, and systems herein.

The flow 600 includes a migration tool container 660 that encapsulates all components of the migration tool system. The flow 600 can include inputs from an individual such as a project engineer 662 who can interact with the migration tool system. The flow can include default dictionary use component 664, a dictionary management component 668, a duplicate default dictionary to custom dictionary component 670, a create new dictionary component 672, a default dictionary 674. The dictionary management component 668 can encapsulate various dictionary manipulation capabilities.

The duplicate default dictionary to custom dictionary component 670 represents the functionality to create a copy of the default dictionary that can be customized for specific migration needs. The create new dictionary component 672 represents a function to create an entirely new custom dictionary from scratch rather than duplicating an existing one. The flow can include various custom dictionaries such as a first custom dictionary (custom dictionary 1) 676 and a second custom dictionary (custom dictionary 2) 678.

The flow can include an upload single file component 680, a source file component 682, an upload multiple files component 684, a migrated source files component 686, a migration component 688, a download single file component 690, a migration report component 692, and a download multiple files component 694.

The upload single file component 680 provides a functionality for the project engineer 662 or other individual to upload an individual PLC code file for migration. Similarly, the upload multiple files component 684 provides a functionality for the project engineer 662 or other individual to upload multiple PLC code files simultaneously for batch migration. The source file component 682 represents a collection of PLC code files that will be processed for migration. The migrated source files component 686 represents the successfully converted PLC code files after the migration process has completed. The migration component 688 contains the core conversion logic that translates current PLC code to new and/or proprietary PLC code using available dictionary mappings. The download single file component 690 represents the functionality to retrieve an individual migrated file after processing. The download multiple files component 694 represents the functionality to retrieve a plurality of migrated file after processing. The migration report component 692 represents a functionality to generate a report containing information about the migration process outcomes, including successful conversions and any issues encountered.

An example flow with respect to FIG. 6 includes the project engineer 662 can upload a single file 680 which accesses source files 682 or can upload multiple files 684 which also accesses source files 682. The source files 682 are then processed by the migration component 688. Migration component 688 references the dictionaries 674, 676, 678 to locate one or more mappings to perform translation. This migration generates the migrated source files 686 and, optionally, may generate the migration report 692. The project engineer 662 can the download a single processed file 690 from migrated source files 686 and/or can download multiple processed files 694 from the migrated source files 686. This is merely an example, which illustrates how the migration tool allows users to manage multiple dictionaries for PLC code migration, process files individually or in batches, and retrieve the migration results after processing is complete.

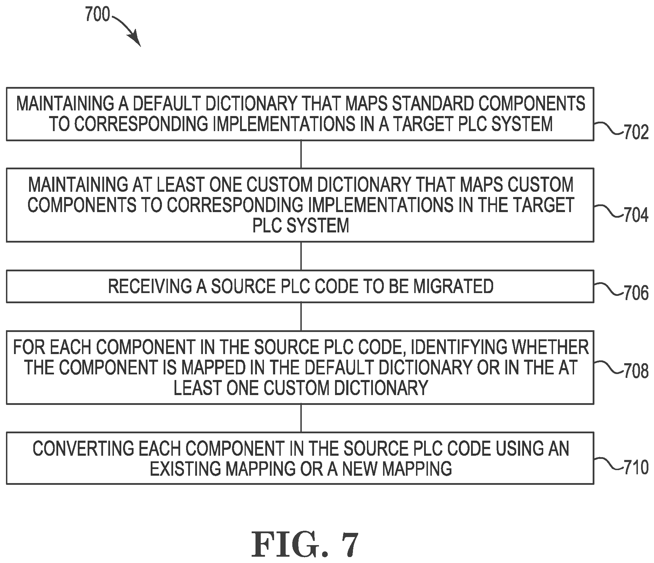

FIG. 7 illustrates an example method 700 for according to this disclosure. The method 700 can be performed with one or more of the devices, apparatus, and systems herein.

At 702, the method includes maintaining a default dictionary that maps standard components to corresponding implementations in a target PLC system. Similarly at 704 the method 700 includes maintaining at least one custom dictionary that maps custom components to corresponding implementations in the target PLC system. The default dictionary and one or more custom dictionaries can be maintained (e.g., stored) on various devices such as those devices described herein.

At 706, the method 700 includes receiving a source PLC code to be migrated. For instance, in some embodiments, the method can include detecting a copy-paste operation of PLC code from a source PLC configuration tool (e.g., corresponding to element 302 in FIGS. 3A-3B and/or element 440 in FIG. 4) to a target PLC configuration tool (e.g., corresponding to element 330 in FIGS. 3A-3B and/or element 440 in FIG. 4), automatically triggering the migration process in response to the detected copy-paste operation; and providing the converted target PLC code to the target PLC configuration tool without requiring additional user input. In some embodiments, the method 700 comprises providing a migration widget that operates as a floating interface within a PLC development environment. For instance, aspects of FIG. 4 including the source PLC builder 440 can be provided as a migration widget. Hence, the method 700 can including permitting, via the migration widget, a user selection of one or more custom dictionaries to be used for the migration e.g., as described with respect to FIG. 4.

In some embodiments, the method 700 can include displaying, via the migration widget, one or more migration status indicators. The status indicators users track the progress and status of their migration tasks. The status indicators can be included in a migration report such as those described herein and/or can be separately displayed. An example of a status indicator includes a progress bar that displays migration progress in the form of a progress bar, with completion indicated by both visual progress and character samples (e.g., "finish"). Another example of a status indicators includes a non-standard component detection indicator that provides indicators when non-native components or files are identified during the migration process, helping users understand when custom mapping may be needed.

The method 700 can include identifying whether each of the components has a mapping in the default dictionary or in the at least one custom dictionary, as indicated at 708. For instance, the method 700 can include receiving, from the user, the new mapping when the mapping does not exist in any of the dictionaries for the component; and maintaining the new mapping in the at least one custom dictionary.

The method 700 can include converting each component in the source PLC code using an existing mapping (e.g., in a default dictionary) or a new mapping (e.g., that exists in a custom dictionary or that is added by a user to a custom dictionary), as described herein. In some embodiments, the conversion of each of the components can occur on each of the components is mapped (e.g., to a standard or custom dictionary).

In some embodiments, the method 700 can include maintaining configurable access control permission associated with the one or more custom dictionaries. For instance, one or more of the components may be locked as described herein. Alternatively or in addition the configurable access permissions can permit one or more users e.g., only certain users to modify the one or more custom dictionaries.

In some embodiments, the method 700 can include creating a copy of at least a subset of a plurality of existing mappings included in the default dictionary; and adding (e.g., storing) at least one new mapping to the subset to create the at least one custom dictionary, as detailed herein. For instance, in some embodiments, the method 700 can include copying the entire default dictionary (e.g., all mappings included therein) and adding at least one new mapping to create a custom dictionary. In some embodiments, the method 700 can include creating a custom dictionary automatically e.g., responsive to generation of a new mapping, as detailed herein.

In some embodiments, the method 700 can include migrating a plurality of components substantially simultaneously. For instance one or more standard components can be migrated substantially simultaneously with one or more non-standard components, among other possibilities. Stated differently, the method 700 can include migrating at least one component mapped to the default dictionary substantially simultaneously with migrating at least one component mapped to the at least one custom dictionary.

In some embodiments, the method 700 can include controlling, via a process controller, an industrial process. For instance, the method 700 can include controlling, via a process controller operating with one or more migrated components, the industrial process.

In some embodiments, the migration herein can occur responsive to a user selection, as detailed herein. However, in some embodiments some or all of the migration can occur automatically (in the absence of any or a subsequent user selection). For instance, a user may select an initial control loop and/or an initial component such as an initial I/O module for migration. In such instances, additional control loop and/or additional components such as additional I/O migration may occur automatically. For example, the user may select an individual control loop within a group of control loops and the methods herein may migrate the selected control loop and subsequently migrated one or more (e.g., all of) the remaining controller loops within the same control loop group, among other possibilities.

Some or all aspects of the method 700 can be performed on process. For instance, each of 702, 704, 706, 708, and 710 can be performed on process. As mentioned, some or all aspects of the method 700 can be performed without altering (in an absence of alteration) hardware of the components herein. For instance, each of 702, 704, 706, 708, and 710 can be performed in the absence of modifying hardware in a process controller or hardware coupled to the process controller (e.g., an individual process controller), described herein. In some embodiments where two separate controllers are employed, the method 700 can be performed in absence of altering hardware of a first controller, a second controller, or both the first controller and the second controller. For instance, the method 700 can be performed without modifying any of the hardware of the first controller and without modifying any of the hardware of the second controller in some embodiments.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random-access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions (instructions stored on a non-transitory medium), procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method of hybrid dictionary based programmable logic controller (PLC) migration, the method comprising:
maintaining a default dictionary that maps standard components to corresponding implementations in a target PLC system;
maintaining at least one custom dictionary that maps custom components to corresponding implementations in the target PLC system;
receiving a source PLC code to be migrated;
for each component in the source PLC code:
identifying whether the component has a mapping in the default dictionary or in the at least one custom dictionary;
when a mapping exists for a component, converting the source PLC code for the component to target PLC code using the identified mapping; and
when a mapping does not exist in any of the dictionaries for the component:
prompting a user to update the at least one custom dictionary with a new mapping for the component; and
converting the source PLC code for the component to the target
PLC code using the new mapping; and
outputting the converted target PLC code.

2. The method of claim 1, further comprising maintaining a priority order among the default dictionary and the one or more custom dictionaries.

3. The method of claim 2, wherein the default dictionary has a higher priority than each of the at least one custom dictionaries.

4. The method of claim 3, when multiple potential migration mappings exist for a component in the source code, further comprising resolving conflicts between the multiple potential migration mappings based on the priority order to select a highest priority mapping in one of the default dictionary or the at least one dictionary.

5. The method of any of claims 1-4, further comprising:
detecting a copy-paste operation of the PLC code from a source PLC configuration tool to a target PLC configuration tool;
automatically triggering migration of the PLC code in response to the detected copy-paste operation.

6. The method of any preceding claim, further comprising providing a migration widget that operates as a floating interface within a PLC development environment.

7. The method of claim 6, further comprising permitting, via the migration widget, a user selection of one or more custom dictionaries to be used for the migration.

8. The method of claim 6, further comprising displaying, via the migration widget, one or more migration status indicators.

9. The method of any preceding claim, further comprising:
receiving, from the user, the new mapping when the mapping does not exist in any of the dictionaries for the component; and
maintaining the new mapping in the at least one custom dictionary.

10. The method of any preceding claim, further comprising maintaining configurable access control permission associated with the one or more custom dictionaries.

11. The method of any preceding claim, wherein the at least one custom dictionary is created by
creating a copy of at least a subset of a plurality of existing mappings included in the default dictionary; and
adding at least one new mapping to the subset to create the at least one custom dictionary.

12. An apparatus comprising:
at least one processor configured to:
maintain a default dictionary that maps standard components to corresponding implementations in a target PLC system;
maintain at least one custom dictionary that maps custom components to corresponding implementations in the target PLC system;
receive a source PLC code to be migrated;
for each component of a plurality of components in the source PLC code:
identifying whether the component has a mapping in the default dictionary or in the at least one custom dictionary; and
i) when an individual mapping exists for a component, converting the source PLC code for the component to target PLC code using the identified mapping; and
ii) when multiple potential migration mappings exist for a component, recommending an optimal conversion mapping; or
iii) when a mapping does not exist for the component:
prompting a user to update the at least one custom dictionary with a new mapping for the component; and
converting the source PLC code for the component to the target PLC code using the new mapping; and
automatically converting each of the plurality of components in the source PLC code to target PLC code using the mappings; and
outputting the converted target PLC code.

13. The apparatus of claim 12, wherein:
the default dictionary contains mapping for standard IEC-61131-3 components; and
the at least one customized dictionary comprises at least one mapping for a non-standard IEC-61131-3 component.

14. The apparatus of either of claims 12 or 13, wherein the converted target PLC code includes a locked code component, wherein the locked code component is locked based on a lock status of the component in the source code, a lock status of a mapping associated with the component in the default dictionary and/or the one or more dictionaries, or both.

15. A non-transitory, computer-readable medium including instructions that when executed by a processor to:
maintain a default dictionary that maps standard components to corresponding implementations in a target PLC system;
maintain at least one custom dictionary that maps custom components to corresponding implementations in the target PLC system;
receive a source PLC code to be migrated;
for each component of a plurality of components in the source PLC code:
identifying whether the component has a mapping in the default dictionary or in the at least one custom dictionary; and
i) when an individual mapping exists for a component, converting the source PLC code for the component to target PLC code using the identified mapping; and
ii) when multiple potential migration mappings exist for a component, recommending an optimal conversion mapping; or
iii) when a mapping does not exist for the component:
prompting a user to update the at least one custom dictionary with a new mapping for the component; and
converting the source PLC code for the component to the target PLC code using the new mapping; and
automatically converting each of the plurality of components in the source PLC code to target PLC code using the mappings; and
outputting the converted target PLC code.
